# EUROPÄISCHE PATENTANMELDUNG

(11) **EP 0 654 605 A1**
(43) Veröffentlichungstag der Anmeldung: **24.05.1995**
(21) Anmeldenummer: 94115828.9
(22) Anmeldetag: 07.10.1994
(51) Int. Cl.: F04B 39/16, B60T 17/00

(54) **Druckluftanlage eines Fahrzeuges**

(30) Priorität: 22.11.1993 DE 4339725
(71) Anmelder: MAN NUTZFAHRZEUGE AG, 80976 München (DE)
(72) Erfinder: Santl, Johann, D-81243 München (DE)

(57) **Zusammenfassung**

Die Erfindung betrifft eine Druckluftanlage eines Fahrzeuges, mit einer Druckluft-Vorsorgungseinrichtung, umfassend einen Luftpresser (2), leitungsmäßig mit einem Lufttrockner (3) verbunden, der eine Vorrichtung zum Abscheiden von Verunreinigungen, wie Öl, Wasser, Schmutz und dergleichen aus der Druckluft und einen Sammelraum zum Aufnehmen der abgeschiedenen Verunreinigungen aufweist, wobei letztere über einen Auslaß abführbar sind.
- Aufgabe:: Schaffung von Möglichkeiten, die im Lufttrockner gesammelten Verunreinigungen umweltverträglich zu entsorgen.
- Lösung :: Dem Lufttrockner (3) ist ein separater Sammelbehälter (8) nachgeordnet, dem die im Lufttrockner (3) gesammelten Verunreinigungen über eine am Auslaß (4) des Sammelraumes abgehende Verbindungsleitung (5) zuführbar sind.

## Beschreibung

Die Erfindung bezieht sich auf eine Druckluftanlage eines Fahrzeuges, insbesondere Lkw und Omnibus, mit Merkmalen entsprechend dem Oberbegriff des Anspruches 1.

Druckluftanlagen der gattungsgemäßen Art sind in serienmäßigen Nutzfahrzeugen so ausgebildet, daß über den im Sammelraum oberhalb des Ablaßventils am Lufttrockner gesammelten Verunreinigungen, wie Öl, Emulsionen, Ölkohle und Wasser, während der Leerlaufphase, d. h. der Regenerationsphase des Lufttrockners, auf die Fahrbahn abgelassen werden, was zu einer Umweltverschmutzung (Grundwasser, Böden) führen kann.

Der Erfindung liegt die Aufgabe zugrunde, Möglichkeiten zu schaffen, die im Lufttrockner gesammelten Verunreinigungen umweltverträglicher entsorgen zu können.

Diese Aufgabe wird erfindungsgemäß durch die Merkmale des Anspruches 1 gelöst, wobei dem Lufttrockner der Druckluft-Versorgungseinrichtung ein separater Sammelbehälter nachgeordnet ist, dem die im Lufttrockner gesammelten Verunreinigungen über eine am Auslaß des Sammelraumes abgehende Verbindungsleitung zuführbar sind.

Vorteilhafte Ausgestaltungen oder Weiterbildungen der erfindungsgemäßen Lösung sind in den Unteransprüchen gekennzeichnet.

Nach einem weiteren Merkmal der Erfindung besteht der separate Sammelbehälter aus einem Oberteil und einem Unterteil , welche fest aber lösbar miteinander verbunden sind.

Auf diese Weise kann das Unterteil des separaten Sammelbehälters entsprechend den Einbauverhältnissen verschiedene Formen oder Volumeninhalte aufweisen und ist zur schnellen Entleerung und Reinigung, z. B. mittels zentralem Schnellverschluß, Bajonettverschluß oder seitlichen Schnellverschlüssen ohne Zuhilfenahme von besonderem Werkzeug vom Oberteil trennbar. Diese Erleichterung führt auch zu der Bereitschaft des Fahrers, die Entleerung in angemessenen Zeitabständen vorzunehmen.

Nach einem weiteren Merkmal der Erfindung ist am Auslaß des Sammelraumes des Lufttrockners oder am Ende der Verbindungsleitung im Oberteil des separaten Sammelbehälters ein Filter oder eine Filter/Geräuschdämpfer-Einheit fest aber lösbar eingebaut, welche die Aufgabe haben, die Öle und festen Bestandteile der gesammelten Verunreinigungen herauszufiltern.

In vorteilhafter Weise kann der Filter entsprechend seiner Ausgestaltung zugleich Geräuschdämpfer sein.

Das Unterteil des separaten Sammelbehälters bildet einen Sammelraum für das mittels des Filters gereinigte und an diesem abgeschiedene Wasser. Die Entleerung des Sammelraumes ist ohne Abnahme des Filters möglich.

Bei entsprechender Filterleistung ist es eventuell möglich, das am Filter des separaten Sammelraumes abgeschiedene Wasser derart zu reinigen, daß es unverzüglich abgelassen werden kann, ohne die Umwelt zu belasten. In diesem Fall könnte die Ausgestaltung des Unterteils des separaten Sammelbehälters zu einem Sammelraum entfallen und der separate Sammelbehälter somit einteilig ausgebildet werden.

Die erfindungsgemäß ausgebildete Einrichtung ist weiterhin durch staudruckabbauende Mittel, welche der separate Sammelbehälter in seinem Oberteil aufweist, gekennzeichnet. Diese sind solcherart beschaffen, daß sie einerseits die vom Lufttrockner kommende Regenerationsluft entweichen lassen und so den schädlichen Staudruck zwischen Lufttrockner und separatem Sammelbehälter abbauen und andererseits zugleich das Eindringen äußerer Medien, wie Staubpartikel der Fahrbahn oder Spritzwasser, verhindern.

Die Öffnungen der staudruckabbauenden Mittel sind dabei so ausgebildet, daß weder beim Befahren von Steigungen oder Gefällen, noch bei extremen Seitenneigungen des Fahrzeuges Öl oder Emulsionen austreten können.

Gemäß einer vorteilhaften Ausgestaltung wird als staudruckabbauendes Mittel ein Überdruckventil im Oberteil des separaten Sammelbehälters vorgesehen.

Nach einem weiteren Merkmal der Erfindung wird dem separaten Sammelbehälter eine Füllstandsanzeige mit oder ohne elektrischer Warneinrichtung zugeordnet,so daß der jeweilige Füllzustand vom Fahrer problemlos erkennbar ist.

Zusätzlich oder alternativ besteht die Möglichkeit, das Unterteil des separaten Sammelbehälters mit füllstandsanzeigenden Merkmalen zu versehen, insbesondere diesen zumindest teilweise transparent auszugestalten.

In vorteilhafter Weise wird der Sammelbehälter im Bereich einer Fahrzeugaußenseite angeordnet, damit er gut zugängig ist.

Nach einem Merkmal der Erfindung ist der Verlauf der Verbindungsleitung solcherart ausgestaltet, daß die im Sammelraum des Lufttrockners gesammelten Verunreinigungen ohne Pumpenunterstützung dem separaten Sammelbehälter zufließen können.

Nachfolgend ist die Erfindung anhand mehrerer in der Zeichnung dargestellter Ausführungsbeispiele noch näher erläutert.

In der Zeichnung zeigen:
- Fig. 1: eine schematische Darstellung der Druckluft-Versorgungseinrichtung einer Druckluftanlage in Fahrzeugen,
- Fig. 2: eine Ausbildung des Oberteils des separaten Sammelbehälters,
- Fig. 3: eine Variante des Oberteils gemäß Fig. 2,
- Fig. 4: eine Variante des Oberteils gemäß Fig. 2,
- Fig. 5: eine schematische Darstellung des Unterteils des separaten Sammelbehälters,
- Fig. 6: eine Einzelheit am Unterteil des separaten Sammelbehälters.

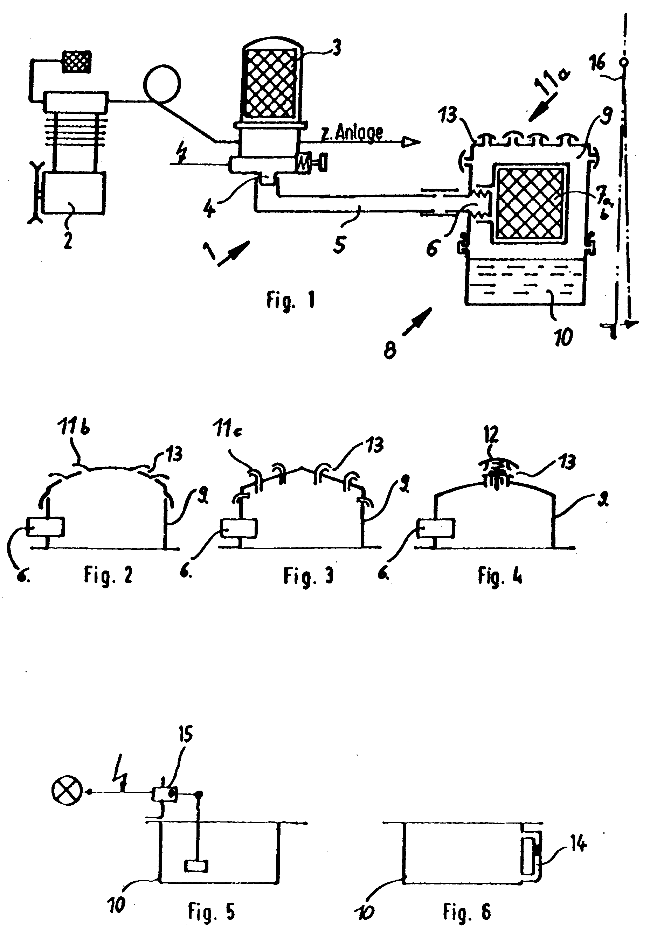

Fig. 1 zeigt die schematische Darstellung einer Druckluft-Versorgungseinrichtung 1 einer Druckluftanlage in Fahrzeugen, mit einem Luftpresser 2, der über eine Kühlschlange mit einem Lufttrockner 3 verbunden und in dem ein hier nicht dargestellter Druckregler integeriert ist. In dem unteren Bereich des Lufttrockners 3 ist ein Sammelraum gegeben, in dem die aus der Druckluft durch den Lufttrockner 3 abgeschiedenen Verunreinigungen, wie Öl, Emulsionen, Ölkohle und Wasser gesammelt und während der Leerlaufphase, d. h. der Regenerationsphase des Lufttrockners 3, über eine an dessen Auslaß 4 abgehende Verbindungsleitung 5 einem separaten Sammelbehälter 8 zugeführt werden, und zwar über einen am Ende 6 der Verbindungsleitung 5 gegebenen Filter 7a, der gleichzeitig auch als Filter/Geräuschdämpfer-Einheit 7b ausgebildet sein kann und im oberen Teil des separaten Sammelbehälters 8 - zentral oder asymmetrisch und leicht auswechselbar - angeordnet ist.

Der separate Sammelbehälter 8 kann - wie dargestellt - aus einem Oberteil 9 und einem mit diesem fest, aber lösbar verbundenen Unterteil 10, in dem sich das an Filter 7a bzw. Filter/Geräuschdämpfer-Einheit 7b abgeschiedene Wasser sammelt, bestehen.

Das Unterteil 10 des separaten Sammelbehälters 8 kann verschiedene Konfigurationen aufweisen und auch seine Volumeninhalte können auf die jeweiligen Fahrzeugverhältnisse abgestimmt sein.

Das Unterteil 10 ist vorzugsweise so mit dem Oberteil 9 verbunden, daß eine schnelle Entleerung und Reinigung des als Sammelraum ausgebildeten Unterteils 10 ohne Abnahme des Filters 7a oder der Filter/Geräuschdämpfer-Einheit 7b und ohne Zuhilfenahme von besonderen Werkzeugen mittels zentralem Schnellverschluß (nicht aufgeführt), z. B. Bajonettverschluß oder seitlichen Schnellverschlüssen, möglich ist.

Gemäß einer nicht gezeigten Variante kann bei hohem Reinigungsgrad des nach Durchlauf des am Filter 7a oder der Filter/Geräuschdämpfer-Einheit 7b anfallenden Wassers der separate Sammelbehälter 8 auch einteilig sein, da dann das Wasser abgelassen werden kann, ohne die Umwelt zu beeinträchtigen.

Auf dem Oberteil 9 des separaten Sammelbehälters 8 ist oberseitig eine ölaustrittssichere Entlüftung 11a, b, c, 12 vorgesehen, die unterschiedlich ausgebildet sein kann.

So zeigt Fig. 1 Öffnungen 13 im oberseitigen Bereich des Oberteils 9, die eine Kappe an ihrem Austritt aufweisen, so daß Wasser und Schmutz keinen Zutritt haben.

Fig. 2 zeigt eine Variante, bei der Öffnungen 13 direkt im oberseitigen Bereich des Oberteils 9 gegeben sind und eine Kappe jeweils aus diesem oberseitigen Bereich ausgeformt ist.

Fig. 3 zeigt eine andere Variante, bei der der oberseitige Bereich des Oberteils 9 als Kegel geformt ist und als Öffnungen 13 herausragende, gebogene Röhrchen vorgesehen sind.

In der Variante nach Fig. 4 ist als ölsaustrittssichere Entlüftung ein Überdruckventil 12 mit seitlichen Öffnungen 13 vorgesehen.

Über die Öffnungen 13 im oberen Bereich des Oberteils 9 des separaten Sammelbehälters 8 kann die Regenerationsluft entweichen und es entsteht so kein schädlicher Staudruck zwischen Lufttrockner 3 und separatem Sammelbehälter 8.

Fig. 5 zeigt in schematischer Darstellung eine Ausführungsform des Unterteils 10 des separaten Sammelbehälters 8 mit einer ihm zugeordneten Füllstandsanzeige mit elektrischer Warneinrichtung 15, während Fig. 6 eine andere Variante des Unterteils 10 mit einer Füllstandsanzeige mittels Steigrohr 14 zeigt. Nach einer weiteren, hier nicht aufgeführten Variante, kann das Unterteil 10 auch - zumindest teilweise - transparent gestaltet sein, um auf diese Weise den Füllstand anzuzeigen.

Nach Fig. 1 wird der separate Sammelbehälter 8 vorzugsweise an einer Fahrzeugaußenseite 16 angeordnet, so daß er problemlos einem schnellen Zugriff zugänglich ist.

Fig. 1 zeigt eine waagrecht angeordnete Verbindungsleitung 5, welche auch (nicht gezeigt) im Gefälle schräg fallend angeordnet sein kann und solcherart ausgestaltet ist, daß die im Sammelraum des Lufttrockners 3 gesammelten Verunreinigungen ohne Pumpenunterstützung dem separaten Sammelbehälter 8 zufließen können.

### Bezugszeichenliste

- 1: Druckluft-Versorgungseinrichtung
- 2: Luftpresser
- 3: Lufttrockner
- 4: Auslaß
- 5: Verbindungsleitung
- 6: Ende der Verbindungsleitung
- 7 a, b: Filter, Filter-Geräuschdämpfereinheit
- 8: separater Sammelbehälter
- 9: Oberteil des separaten Sammelbehälters
- 10: Unterteil des separaten Sammelbehälters
- 11a,b,c: staudruckabbauende Mittel
- 12: Überdruckventil
- 13: Öffnungen der staudruckabbauenden Mittel
- 14: Füllstandsanzeige (Steigrohr)
- 15: Füllstandsanzeige (elektrisch mit Warneinrichtung)
- 16: Fahrzeugseite

## Patentansprüche

1. Druckluftanlage eines Fahrzeuges, insbesondere Lkw und Omnibus, mit einer Druckluft-Versorgungseinrichtung, umfassend einen Luftpresser, leitungsmäßig verbunden mit einem Lufttrockner, der eine Vorrichtung zum Abscheiden von Verunreinigungen, wie Öl, Wasser, Schmutz und dergleichen aus der Druckluft und einen Sammelraum zum Aufnehmen der abgeschiedenen Verunreinigungen aufweist, wobei letztere über einen Auslaß abführbar sind, dadurch gekennzeichnet, daß dem Lufttrockner (3) ein separater Sammelbehälter (8) nachgeordnet ist, dem die im Luftrockner (3) gesammelten Verunreinigungen über eine am Auslaß (4) des Sammelraumes abgehende Verbindungsleitung (5) zuführbar sind.

2. Druckluftanlage nach Anspruch 1, dadurch gekennzeichnet, daß derseparate Sammelbehälter (8) aus einem Oberteil (9) und einem Unterteil (10) besteht,welche fest, aber lösbar miteinander verbunden sind.

3. Druckluftanlage nach Anspruch 1 oder 2, dadurch gekennzeichnet, daß im Oberteil (9) des separaten Sammelbehälters (8) am Ende (6) der Verbindungsleitung (5) ein Filter (7a) oder eine Filter/Geräuschdämpfer-Einheit (7b) fest, aber lösbar eingebaut ist, und daß das Unterteil (10) des separaten Sammelbehälters (8) einen Sammelraum für das mittels des Filters (7a, b) gereinigte und an diesem abgeschiedene Wasser bildet.

4. Druckluftanlage nach einem der vorhergehenden Ansprüche, dadurch gekennzeichnet, daß der separate Sammelbehälter (8) in seinem Oberteil (9) staudruckabbauende Mittel (11a, b, c, 12) aufweist, solcherart, daß diese zugleich das Eindringen äußerer Medien in den separaten Sammelbehälter (8) verhindern.

5. Druckluftanlage nach Anspruch 4, dadurch gekennzeichnet, daß als staudruckabbauendes Mittel ein Überdruckventil (12) vorgesehen ist.

6. Druckluftanlage nach einem der vorangegangenen Ansprüche, dadurch gekennzeichnet, daß dem separaten Sammelbehälter (8) eine Füllstandsanzeige (14), insbesondere mit elektrischer Warneinrichtung (15), zugeordnet ist.

7. Druckluftanlage nach einem der Ansprüche 1 bis 5, dadurch gekennzeichnet, daß das Unterteil (10) des separaten Sammelbehälters (8) zusätzlich oder alternativ füllstandsanzeigende Merkmale aufweist, insbesondere zumindest teilweise transparent ist.

8. Druckluftanlage nach einem der vorangegangenen Ansprüche, dadurch gekennzeichnet, daß der separate Sammelbehälter (8) gut zugängig im Bereich einer Fahrzeugseite (16) angeordnet ist.

9. Druckluftanlage nach Anspruch 1, dadurch gekennzeichnet, daß der Verlauf der Verbindungsleitung (5) solcherart ausgestaltet ist, daß die im Sammelraum des Luftrockners (3) gesammelten Verunreinigungen ohne Pumpenunterstützung dem separaten Sammelbehälter (8) zufließen können.
